# EUROPEAN PATENT SPECIFICATION

(11) **EP 0 906 721 B1**
(45) Date of publication and mention of the grant of the patent: **21.04.1999**
(21) Application number: 97830708.0
(22) Date of filing: 23.12.1997
(51) Int. Cl.: A01D 46/26

(54) **Tree shaking device**
Baumschüttler
Dispositif à secouer les arbres

(43) Date of publication of application: 07.04.1999
(73) Proprietor: Cifarelli S.r.l., 27058 Voghera (Pavia) (IT)
(72) Inventor: Cifarelli, Raffaele, 27058 Voghera (Pavia) (IT)
(74) Representative: Sutto, Luca

(56) References cited:
- EP-A- 0 294 842
- DE-U- 7 421 699
- FR-A- 1 496 592
- FR-A- 2 403 739
- US-A- 3 457 713
- US-A- 4 873 820

## Description

The present invention relates to a tree shaking device.

In particular, the subject device finds application in harvesting olives, chestnuts, walnuts, hazelnuts and the like.

As is well known, to harvest products such as those mentioned above, ample use is made of shaking devices comprising a translating shaft fitted at its end with a hook to be engaged to a branch of the tree to be shaken.

The translating shaft receives its motion, by means of conventional kinematic mechanisms, from a motor assembly associated to the shaking device.

In practice when the motor assembly is activated, the translating shaft of the shaking device is driven in a reciprocating motion according to strokes of 50-70 millimetres causing the subsequent motion of the end hook which, in turn, produces a strong oscillation of the branch of the tree whereto it has been fastened beforehand.

This type of device has shown itself to be very efficient in harvesting products such as olives, walnuts, hazelnuts since with just a few short actions of the shaking device a tree is harvested completely.

Although they are widely used, the shaking devices summarily described above (see, for example, US-A-3 457 713) have nonetheless shown some drawbacks. In particular, the oscillatory stresses imparted by the motor assembly to the translating shaft unload both onto the branch and onto the grips with which the device itself is provided creating a noticeable discomfort for the user and, in case of prolonged use, strong pain and even circulatory problems to the upper limbs.

In the past, the attempt was made to solve at least partially the drawbacks mentioned associating to the shaking devices shock absorbing systems of various natures; however, as of yet no solutions have been devised to ensure an adequate level of utilisation comfort which could allow a prolonged employment of the shaking device by a single user.

In this situation, a fundamental object is to solve the drawbacks mentioned, making available a new tree shaking device presenting such a structure as to minimise the stresses transmitted to the user in order to allow him, insofar as possible, an easy utilisation of the device itself without transmission of harmful vibrations during use.

This and other objects besides which shall be made clearer in the course of the description that follows are substantially reached by a tree shaking device according to what is described in the enclosed claims.

Additional characteristics and advantages of the invention shall be made more evident in the detailed description that follows of a preferred, but not exclusive, embodiment of a tree shaking device according to the present invention.

The description shall be provided hereafter with reference to the accompanying drawings, provided herein purely by way of non limiting indication, wherein:
- Figure 1 is an overall perspective view of a shaking device according to the invention;
- Figure 2 is an interrupted side view of the shaking device in Figure 1;
- Figure 3 is a section along the trace III-III in Figure 2;
- Figure 4 shows an enlarged detail of Figure 3 related to a main grip portion associated to the subject device;
- Figure 5 relates to a further enlarged detail of Figure 3 showing an auxiliary grip portion of the device constituting the subject of the present invention.

With reference to the aforementioned figures, the number 1 indicates in its entirety a tree shaking device in particular for harvesting olives, chestnuts, walnuts, hazelnuts and the like.

The shaking device presents a support body 2, used to house a connecting kinematic mechanism 3, and a movable shaft 4 translating with respect to the support body 2 with reciprocating motion along a pre-set drive axis 5 coinciding with the axis of longitudinal development of the shaft 4 itself.

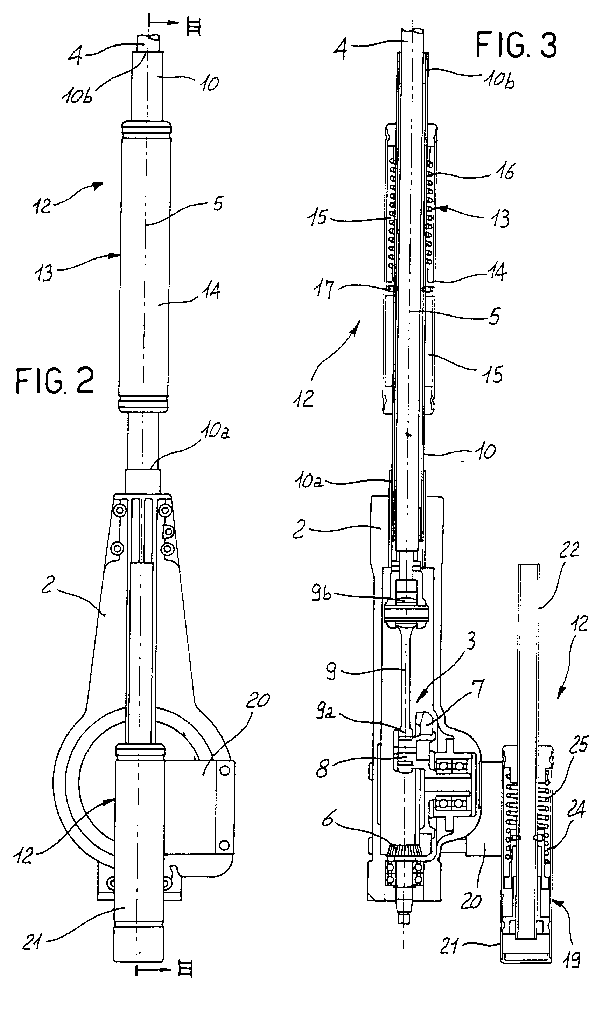

The kinematic mechanism 3 mentioned above, shown schematically in Figure 3, is able to transfer the motion coming from a motor assembly (not shown in the Figure) to the movable shaft 4.

In greater detail the motor imparts a rotation to a first gear wheel 6 housed in the support body 2 and presenting an axis coinciding with the drive axis of the movable shaft 4.

The first gear wheel 6 meshes peripherally with a second gear wheel 7 also housed in the support body 2, but having its axis of rotation orthogonal to the axis of rotation of the previous wheel.

In practice first and second gear wheel 6, 7 define a bevel gear pair able to transfer a rotatory motion from one plane to a plane orthogonal thereto.

From the second gear wheel 7 then emerges a pin 8 with axis parallel and in eccentric position with respect to the axis of rotation of the wheel 7 itself.

A connecting rod 9 presents a first end 9a engaged rotationally to said pin 8 and a second end 9b engaged rotationally to a terminal portion of the movable shaft 4. The rod 9 is able to transform the rotatory motion of the pin 8 into a reciprocating translatory motion which is transmitted directly to the movable shaft 4.

The operation of the kinematic mechanism is such that, once the device is activated, the motor causes the rotation of the first gear wheel 6, which, meshing onto the second wheel 7, transfers thereto a rotational motion on an axis rotated by ninety degrees.

The pin 8, integral with the second gear wheel 7, rotates around the axis of rotation thereof driving in its motion the first end 9a of the connecting rod 9, which in turn transforms the motion in the other end 9b into translatory motion, thereby driving the movable shaft 4 in reciprocating motion.

It should be noted that in order to minimise the stresses transmitted to the structure in a direction transverse to the axis 5 of the movable shaft 4, the kinematic chain 3 has been positioned in such a way as greatly to reduce forces and couples not applied directly to the drive axis 5.

Advantageously the kinematic mechanism 3 is assembled in such a way that the connecting rod 9 moves in a plane containing the drive axis 5 of the movable shaft 4.

Also for the purpose of minimising stresses and as can be observed in Figure 3, the first gear wheel 6 has the same axis as the movable shaft 4 and its diameter is reduced to be able to position and drive the second gear wheel 7 in a parallel plane at a short distance from the drive plane of the connecting rod 9.

The compactness of the kinematic chain, linked to the simplicity of the components used, as well as to their specific disposition, allows a noticeable reduction in the transverse stresses transmitted by the shaking device when it operates.

Moreover the reduced number of teeth of the first gear wheel 6 (linked to the small diametrical dimensions thereof), which mesh onto the teeth of the second wheel 7 of greater diameter, also assures the correct reduction ratio of the rotations of the motor.

The translating shaft 4, whereto the kinematic mechanism transmits the motion, is housed inside a tubular body 10 which serves as a guide during the reciprocating motion. More in detail the guiding tubular body 10 presents an end 10a integral with the support body 2 and an opposite end 10b wherefrom the movable shaft 4 partially emerges.

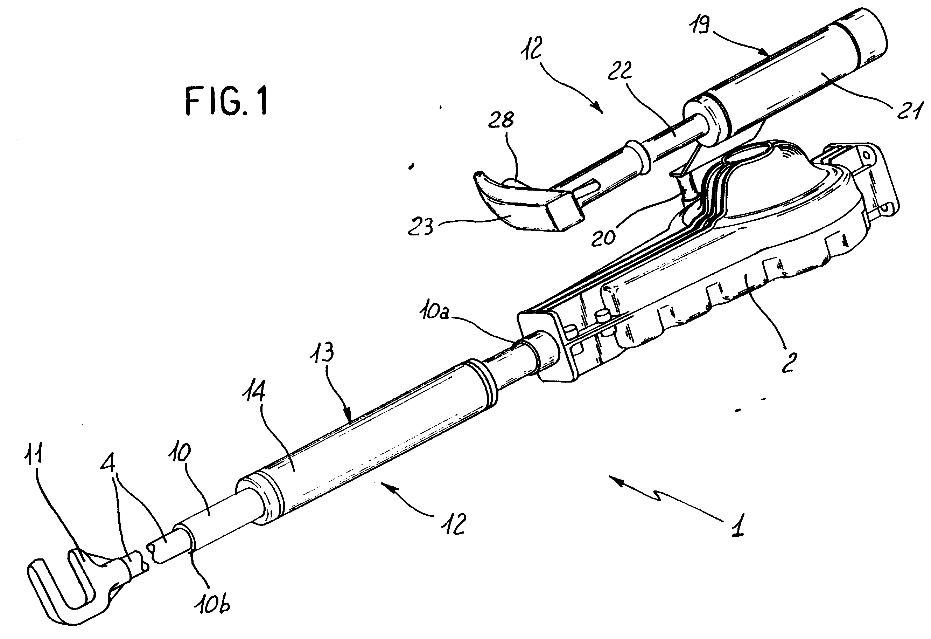

As can be seen in Figure 1, to the free end of the translating shaft 4 is associated a grip element 11, for example a hook, to allow a simple engagement of the device 1 to the branch to be shaken for harvesting. It should be noted that the hook may be engaged directly to the tree 4, or with the interposition of an extension if the circumstances so require.

The shaking device is also fitted with gripping means 12 associated to the support body 2 and comprising a main portion 13 engaged to the translating shaft 4.

According to the invention, elastic means 16, 25 are provided, operatively interposed between the gripping means 12 and the support body 2, shaped and positioned in such a way as to impart an elastic force having at least one component directed parallel to the drive axis 5.

Purpose of the elastic means 16, 25 is to prevent the reaction forces generated during the shaking operation from being transmitted integrally, directly and instantaneously to the operator.

It is evident that the greatest stresses are those directed parallel to the movable shaft 4, hence the presence of elastic means 16, 25 is necessary to absorb or at least partially compensate for such forces.

From a structural point of view, the main grip portion 13 presents an outer sleeve 14 coaxially guided by the tubular body 10 and defining therewith a hollow space wherein is advantageously housed a first elastic element 16 imparting an elastic reaction force directed along the drive axis 5 of the movable shaft 4 without components transverse to the axis itself, to reach the maximum operative effectiveness in terms of absorption, compensation and damping of the stresses received.

The first elastic element 16 has a first end 16a integral with the tubular body 10 and a second end 16b integral with the outer sleeve 14.

In practice the tubular body 10 is provided, in a position centred along its own axis, with an intermediate insert 17 integral with the body 10 itself.

The intermediate insert 17 irremovably engages the elastic element 16.

The outer sleeve 14 also bears integral end guide elements 18 slidingly engaged on the tubular body 10; to one of such end elements 18 is fastened the other end 16b of the elastic element 16.

As can be noted in the accompanying figures such elastic element 16 can be constituted for instance by a spring, conveniently positioned in the interstice 15, presenting an axis coinciding with that of the translating shaft 4. Alternatively to the spring 16, it could be possible to use a gas operating in the interstice 15 and set to be placed under pressure following relative displacements between sleeve and tubular body thus imparting an elastic reaction similar to that of a spring. The spring 25 can also be so substituted.

During operation, the reaction forces directed parallel to the drive axis 5 cause the elastic axial deformation of the spring, which by moving absorbs part of the energy transmitted thereto, transferring it only in part to the sleeve 13. Note that in any case the elastic action of the spring combined with the damping action, given by the friction of the mutually sliding parts, determines a noticeable reduction in the instantaneous loads transmitted to the user.

In a different embodiment it can also be provided for the function of dissipating the forces transmitted by the device to the user to be generated by a fluid which moves between two cavities wherein the interstice 15 is divided by the intermediate insert 17.

More specifically blow-by ports can be obtained on the intermediate insert 17 between the two cavities, in such a way that the transmitted stresses, causing a displacement of the tubular body with respect to the sleeve, let the fluid flow from one cavity to the other causing load losses and consequently dissipation.

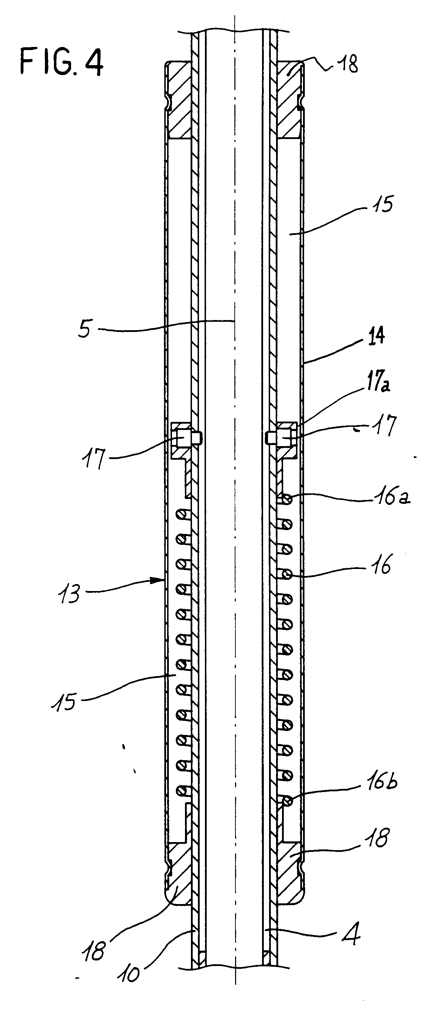

In particular in the embodiment shown in Figs. 4-5, one can note a blow-by port 17a, 26a defined between the lateral surface of the intermediate insert 17, 26 and the side wall of the outer sleeve 14, 21.

In practice the intermediate insert 17, 26 is constructed with a smaller radial dimension than the radial dimension of the sleeve 14, 21 allowing the passage of fluid, possibly even air, between the cavities of the interstice15, 24.

The two embodiments (spring\fluid dissipater) can be provided both individually and simultaneously on the device.

The gripping means 12 further comprise an auxiliary grip portion 19 associated to the support body 2 in a position parallel to the translating shaft 4.

To the support body 2 is solidly fastened a support element 20 which hears irremovably connected the auxiliary grip portion 19. Such auxiliary portion 19 comprises a lateral outer sleeve 21 of essentially cylindrical shape with axis of development parallel to the drive axis 5 of the movable shaft.

Engaged slidingly and coaxially guided internally to the outer sleeve 21 is a lateral tubular body 22 partially emerging from the sleeve 21 itself, also comprised in the auxiliary portion 19 and presenting on its end a directing grip 23.

The device is practically constructed in such a way that the operator can support it with one hand through the main grip portion 13 and easily direct it with the other by means of the directing grip 23. The latter may also advantageously be provided with a push-button 28 for activating the motor assembly.

Between the lateral outer sleeve 21 and the tubular body 22 is defined a space 24 wherein is housed a second elastic element 25 which is part of the mentioned elastic means.

The elastic element 25, generally a spring, is able to impart an elastic reaction force directed exclusively parallel to said drive axis 5 of the movable shaft 4 without transverse components. It is also therefore able to maximise the desired compensation effects, maximising efficiency.

The second elastic element 25 presents a first end 25a fastened to an intermediate insert 26 integral with the lateral tubular body 22 and a second end 25b fastened to one of the end guide elements 27 borne integrally by the lateral outer sleeve 21 and slidingly engaged on the lateral tubular body 22.

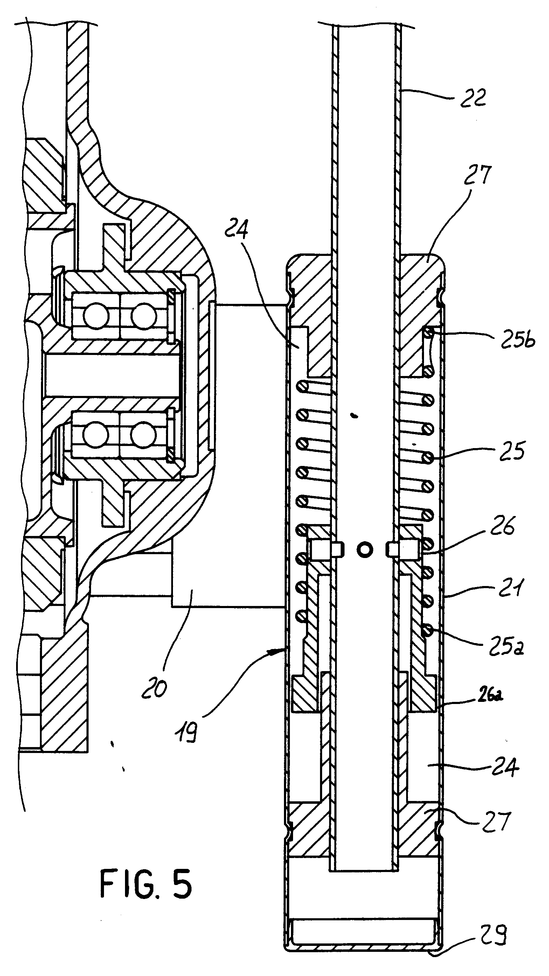

Note that on the opposite side with respect to the end element 27 located above in Figure 5 is provided a breech organ 29 operating the closure of the lateral outer sleeve 21.

The operation of the second elastic element 25 is wholly similar to that of the element 16 described previously.

The invention attains important advantages.

A great efficiency in the action of the elastic means 16, 25 is thus obtained by using a spring able to absorb, compensate for and only partially transmit to the operator the stresses coming from the device.

The device also accomplishes an effective damping action thanks to the sliding friction of the mutually movable parts of the gripping means and thanks to the dissipative effects due to the blow-by of fluid between two chambers wherein the interstice 15 is divided.

First of all the device according to the present invention is able effectively to reduce the stresses transmitted, under operating conditions, to the user.

In particular, thanks to the elastic elements interposed between the gripping means and the support body, it is able to compensate for reaction forces transmitted parallel to the drive axis of the movable shaft, allowing a prolonged use of the shaking device without causing heavy discomfort to the operator.

Additionally, thanks to the particular kinematic mechanisms for the transmission of motion between the motor and the translating shaft and thanks to their specific position, the device minimises both vibrating stresses and moments whose axis does not coincide with the axis of the movable shaft, thus making the support and use of the subject machine easier and less cumbersome.

It should also be noted that the positioning of both elastic elements with axis parallel to the direction wherein the greater stresses are generated allows the best performance of the elements themselves; such positioning also prevents the onset of additional forces with a direction not parallel to the elastic axis.

Note that such forces manifest themselves every time the springs are inclined with respect to the axis of the translating shaft.

Not least, it should be observed that the main outer sleeve, bearing within it the first elastic element and performing the greater damping action, is advantageously positioned coaxially with the translating shaft so as to prevent the onset of reaction couples which would manifest themselves if the latter were positioned with its axis parallel to, but not coinciding with, the axis of the translating shaft.

## Claims

1. Tree shaking device comprising:
- a support body (2);
- a movable shaft (4), translatable in reciprocating motion along a pre-set drive axis (5) with respect to the support body (2);
- a connecting kinematic mechanism (3) housed in the support body (2) and able to transfer motion coming from a motor assembly to said movable shaft (4);
- grip means (12) operatively associated with said support body (2), characterised in that it further comprises elastic means (16, 25), operatively interposed between the grip means (12) and the support body (2), shaped and positioned in such a way as to impart an elastic reaction force presenting at least one component directed parallel to said drive axis (5) of the movable shaft (4).

2. Tree shaking device according to claim 1, characterised in that it comprises a tubular guide body (10), set slidingly to house said movable shaft (4), the tubular guide body (10) presenting an end (10a) integral with the support body (2) and an opposite end (10b) wherefrom said movable body (4) partially emerges.

3. Tree shaking device according to claim 1, characterised in that the gripping means (12) comprise a main gripping portion (13) associated coaxially to the translating shaft (4) and in that the elastic means comprise a first elastic element (16) exercising an elastic reaction force having a direction coinciding with the drive axis (5) of the movable shaft (4).

4. Tree shaking device according to claims 2 and 3, characterised in that the main gripping portion (13) comprises an outer sleeve (14) coaxially guided on the tubular body (10), said first elastic element (16) being operatively inserted in an interstice (15) defined between the outer sleeve (14) and the tubular body (10) and presenting a first end (16a) integral with the tubular body (10) and a second end (16b) integral with the outer sleeve (14).

5. Tree shaking device according to claim 4, characterised in that the first end (16a) of the elastic element (16) is integral with an intermediate insert (17) fastened to the tubular body (10) and operating within the interstice (15).

6. Tree shaking device according to claim 4, characterised in that the second end (16b) of the first elastic element (16) is fastened to a terminal guide element (18) solidly borne by the outer sleeve (14) and slidingly engaged on the tubular body (10).

7. Tree shaking device according to claim 1 characterised in that the gripping means (12) comprise an auxiliary grip portion (19) associated to the support body (2) in a position parallel to the translating shaft (4) and in that the elastic means comprise a second elastic element (25) imparting an elastic reaction force directed exclusively parallel to said drive axis (5) of the movable shaft (4).

8. Tree shaking device according to claim 7 characterised in that the auxiliary grip portion (19) comprises a lateral tubular body (22) coaxially guided within a lateral outer sleeve (21) solidly associated to the support body (2) by means of a support element (20) and presenting axis of development parallel to the drive axis (5) of the movable shaft (4), said second elastic element (25) being operatively inserted in an interstice (24) defined between the lateral outer sleeve (21) and the lateral tubular body (22) and presenting a first end (25a) integral with the lateral tubular body (22) and a second end (25b) integral with the lateral outer sleeve (21).

9. Tree shaking device according to claim 8, characterised in that the first end (25a) of the second elastic element (25) is integral to an intermediate insert (26) fastened to the lateral tubular body (22).

10. Tree shaking device according to claim 8, characterised in that the second end (25b) of the second elastic element (25) is fastened to a terminal guide element (27) solidly borne by the lateral outer sleeve (21) and slidingly engaged on the lateral tubular body (22).

11. Tree shaking device according to claim 1, characterised in that said connecting kinematic mechanism comprises:
- a bevel gear pair presenting a first gear wheel (6) coaxial to the movable shaft (4) and driven by the motor assembly and a second gear wheel (7) with axis orthogonal to the axis of the first gear wheel (6) and meshing therewith;
- a connecting rod (9) presenting a first end (9a) engaged to the second gear wheel (7) in eccentric position and a second end (9b) engaged to the movable shaft (4), said connecting rod (9) operating in a plane containing the drive axis (5) and the axis of the first gear wheel.

12. Tree shaking device according to claim 5 or 9 characterised in that said intermediate insert (17;26) defines at least one blow-by port (17a;26a) between two semi-parts whereinto the interstice (15, 24) is divided by the intermediate insert itself (17, 26).

## Patentansprüche

1. Baumschüttler, umfassend:
- einen Haltekörper (2);
- eine bewegliche Welle (4), die längs einer vorgegebenen Betätigungsachse (5) gegenüber dem Haltekörper (2) hin- und herverschoben wird;
- ein vom Haltekörper (2) aufgenommenes Verbindungsgetriebe (3), das eine von einer Antriebseinheit kommende Bewegung der beweglichen Welle (4) überträgt;
- Greifmittel (12), die dem Haltekörper (2) wirksam zugeordnet sind,
dadurch gekennzeichnet, daß er überdies Federmittel (16, 25) umfaßt, die wirksam zwischen den Greifmitteln (12) und dem Haltekörper (2) zwischengeschaltet derart profiliert und positioniert sind, daß eine federnde Reaktionskraft aufgedrückt wird, die mindestens eine Komponente aufweist, die parallel zur Betätigungsachse (5) der beweglichen Welle (4) gerichtet ist.

2. Baumschüttler nach Anspruch 1, dadurch gekennzeichnet, daß er einen rohrförmigen Führungskörper (10) aufweist, der die bewegliche Welle (4) gleitbar aufnimmt, wobei der rohrförmige Führungskörper (10) ein am Lagerkörper (2) festliegendes Ende (10a) und ein gegenüberliegendes Ende (10b) aufweist, aus dem teilweise die bewegliche Welle (4) hervorragt.

3. Baumschüttler nach Anspruch 1, dadurch gekennzeichnet, daß die Greifmittel (12) einen Hauptgreifabschnitt (13) umfassen, der koaxial der Verschiebewelle (4) zugeordnet ist, und dadurch, daß die Federmittel ein erstes Federelement (16) umfassen, das eine federnde Reaktionskraft mit einer Richtung ausübt, die mit der Betätigungsachse (5) der beweglichen Welle (4) zusammenfällt.

4. Baumschüttler nach Anspruch 2 und 3, dadurch gekennzeichnet, daß der Hauptgreifabschnitt (13) eine Außenmuffe (14) umfaßt, die am rohrförmigen Körper (10) koaxial geführt ist, wobei das erste Federelement (16) in einem Zwischenraum (15) wirksam eingeführt ist, der zwischen der Außenmuffe (14) und dem rohrförmigen Körper (10) festgelegt ist und ein ersten am rohrförmigen Körper (10) festliegendes Ende (16a) und ein zweites an der Außenmuffe (14) festliegendes Ende (16b) aufweist.

5. Baumschüttler nach Anspruch 4, dadurch gekennzeichnet, daß das erste Ende (16a) des Federelementes (16) an einem ersten Zwischeneinsatz (17) festliegt, der am rohrförmigen Körper (10) befestigt ist und innerhalb des Zwischenraumes (15) wirkt.

6. Baumschüttler nach Anspruch 4, dadurch gekennzeichnet, daß das zweite Ende (16b) des ersten Federelementes (16) an einem endseitigen Führungselement (18) befestigt ist, das von der Außenmuffe (14) fest getragen wird und am rohrförmigen Körper (10) gleitbar in Eingriff steht.

7. Baumschüttler nach Anspruch 1, dadurch gekennzeichnet, daß die Greifmittel (12) einen Hilfsgreifabschnitt (19) umfassen, der dem Haltekörper (2) in einer zur Verschiebewelle (4) parallelen Stellung zugeordnet ist, und dadurch, daß die Federmittel ein zweites Federelement (25) umfassen, das eine federnde Reaktionskraft aufdrückt, die ausschließlich parallel zur Betätigungsachse (5) der beweglichen Welle (4) gerichtet ist.

8. Baumschüttler nach Anspruch 7, dadurch gekennzeichnet, daß der Hilfsgreifabschnitt (19) einen seitlichen, rohrförmigen Körper (22) umfaßt, der koaxial innerhalb einer seitlichen Außenmuffe (21) koaxial geführt ist, die dem Haltekörper (2) über ein Stützelement (20) fest zugeordnet ist und eine abwickelnde Achse aufweist, die zur Betätigungsachse (5) der beweglichen Welle (4) parallel ist, wobei das zweite Federelement (25) in einem Zwischenraum (24) wirksam eingeführt ist, der zwischen der seitlichen Außenmuffe (21) und dem seitlichen, rohrförmigen Körper (22) festgelegt ist und ein erstes, am rohrförmigen, seitlichen Körper (22) festliegendes Ende (25a) und ein zweites, an der seitlichen Außenmuffe festliegendes Ende (25b) aufweist.

9. Baumschüttler nach Anspruch 8, dadurch gekennzeichnet, daß das erste Ende (25a) des zweiten Federelementes (25) an einem Zwischeneinsatz (26) festliegt, der am seitlichen, rohrförmigen Körper (22) befestigt ist.

10. Baumschüttler nach Anspruch 8, dadurch gekennzeichnet, daß das zweite Ende (25b) des zweiten Federelementes (25) an einem endseitigen Führungselement (27) befestigt ist, das durch die seitliche Außenmuffe (21) getragen wird und am seitlichen, rohrförmigen Körper (22) gleitbar in Eingriff steht.

11. Baumschüttler nach Anspruch 1, dadurch gekennzeichnet, daß das Verbindungsgetriebe umfaßt:
- Einen Kegeltrieb, der ein erstes Zahnrad (6), das koaxial zur beweglichen Welle (4) liegt und durch die Antriebseinheit angetrieben wird, und ein zweites Zahnrad (7) mit einer zur Achse des ersten Zahnrades (6) kommenden Achse aufweist, das mit diesem kämmt;
- eine Koppelstange (9), die ein erstes, am zweiten Zahnrad (7) in exzentrischer Stellung angreifendes Ende (9a) und ein zweites Ende (9b) aufweist, das an der beweglichen Welle (4) angreift, wobei die Koppelstange (9) in einer Ebene wirkt, die die Betätigungsachse (5) und die Achse des ersten Zahnrades enthält.

12. Baumschüttler nach Anspruch 5 oder 9, dadurch gekennzeichnet, daß der Zwischeneinsatz (17; 26) mindestens einen Zugspalt (17a; 26a) zwischen zwei Teilhälften festlegt, in die der Zwischenraum (15, 24) durch den Zwischeneinsatz selbst (17, 26) unterteilt wird.

## Revendications

1. Dispositif à secouer les arbres, comprenant:
- un corps support (2);
- un arbre mobile (4), susceptible de translation selon un mouvement alternatif le long d'un axe d'entraînement prédéterminé (5) par rapport au corps support (2);
- un mécanisme cinématique de liaison (3) logé dans le corps support (2) et en mesure de transférer le mouvement en provenance d'un groupe moteur audit arbre mobile (4);
- des moyens de prise (12) associés de manière opérationnelle audit corps support (2), caractérisé en ce qu'il comporte en outre des moyens élastiques (16, 25), interposés de manière opérationnelle entre les moyens de prise (12) et le corps support (2), conformés et positionnés de façon à imprimer une force de réaction élastique présentant au moins un composant dirigé parallèlement audit axe d'entraînement (5) de l'arbre mobile (4).

2. Dispositif à secouer les arbres selon la revendication 1, caractérisé en ce qu'il comporte un corps tubulaire de guidage (10), agencé de manière a loger de façon coulissante ledit arbre mobile (4), le corps tubulaire de guidage (10) présentant une extrémité (10a) solidaire du corps support (2) et une extrémité opposée (10b) de laquelle ledit corps mobile (4) fait partiellement saillie.

3. Dispositif à secouer les arbres selon la revendication 1, caractérisé en ce que les moyens de prise (12) comportent une portion principale de prise (13) associée de manière coaxiale à l'arbre (4) susceptible de translation et en ce que les moyens élastiques comportent un premier élément élastique (16) exerçant une force de réaction élastique ayant une direction coïncidant avec l'axe d'entraînement (5) de l'arbre mobile (4).

4. Dispositif à secouer les arbres selon les revendications 2 et 3, caractérisé en ce que la portion principale de prise (13) comporte un manchon extérieur (14) guidé de manière coaxiale sur le corps tubulaire (10), ledit premier élément élastique (16) étant inséré de manière opérationnelle dans un interstice (15) défini entre le manchon extérieur (14) et le corps tubulaire (10) et présentant une première extrémité (16) solidaire du corps tubulaire (10) et une seconde extrémité (16b) solidaire du manchon extérieur (14).

5. Dispositif à secouer les arbres selon la revendication 4, caractérisé en ce que la première extrémité (16a) de l'élément élastique (16) est solidaire d'une pièce insérée intermédiaire (17) fixée au corps tubulaire (10) et opérant à l'intérieur de l'interstice (15).

6. Dispositif à secouer les arbres selon la revendication 4, caractérisé en ce que la seconde extrémité (16b) du premier élément élastique (16) est fixée à un élément de guidage terminal (18) porté solidairement par le manchon extérieur (14) et engagé de manière coulissante sur le corps tubulaire (10).

7. Dispositif à secouer les arbres selon la revendication 1, caractérisé en ce que les moyens de prise (12) comportent une portion de prise auxiliaire (19) associée au corps support (2) dans une position parallèle à l'arbre susceptible de translation (4) et en ce que les moyens élastiques comportent un deuxième élément élastique (25) imprimant une force de réaction élastique dirigée exclusivement parallèlement audit axe d'entraînement (5) de l'arbre mobile (4).

8. Dispositif à secouer les arbres selon la revendication 7, caractérisé en ce que la portion de prise auxiliaire (19) comporte un corps tubulaire latéral (22) guidé de manière coaxiale à l'intérieur d'un manchon extérieur latéral (21) associé solidairement au corps support (2) par un élément de support (20) et présentant un axe de développement parallèle à l'axe d'entraînement (5) de l'arbre mobile (4), ledit deuxième élément élastique (25) étant inséré de manière opérationnelle dans un interstice (24) défini entre le manchon extérieur latéral (21) et le corps tubulaire latéral (22) et présentant une première extrémité (25a) solidaire du corps tubulaire latéral (22) et une seconde extrémité (25b) solidaire du manchon extérieur latéral (21).

9. Dispositif à secouer les arbres selon la revendication 8, caractérisé en ce que la première extrémité (25a) du deuxième élément élastique (25) est solidaire d'une pièce insérée intermédiaire (26) fixée au corps tubulaire latéral (22).

10. Dispositif à secouer les arbres selon la revendication 8, caractérisé en ce que la seconde extrémité (25b) du deuxième élément élastique (25) est fixée à un élément terminal de guidage (27) porté solidairement par le manchon extérieur latéral (21) et engagé de manière coulissante sur le corps tubulaire latéral (22).

11. Dispositif à secouer les arbres selon la revendication 1, caractérisé en ce que ledit mécanisme cinématique de liaison comporte:
- un harnais d'engrenages coniques présentant une première roue dentée (6) coaxiale de l'arbre mobile (4) et entraînée par le groupe moteur et une deuxième roue dentée (7) d'axe orthogonal à l'axe de la première roue dentée (6) et engrenant dans celle-ci;
- une bielle (9) présentant une première extrémité (9a) engagée à la deuxième roue dentée (7) en position excentrique et une seconde extrémité (9b) engagée à l'arbre mobile (4), ladite bielle (9) opérant dans un plan contenant l'axe d'entraînement (5) et l'axe de la première roue dentée.

12. Dispositif à secouer les arbres selon la revendication 5 ou 9, caractérisé en ce que ladite pièce insérée intermédiaire (17; 26) définit au moins une lumière de passage (17a; 26a) entre deux demi-portions dans lesquelles l'interstice (15, 24) est divisé par la pièce insérée intermédiaire elle-même (17, 26).
